## Europäisches Patentamt
## European Patent Office
## Office européen des brevets

(19)

(11) Veröffentlichungsnummer: **0 040 261**
**A1**

(12) EUROPÄISCHE PATENTANMELDUNG

(21) Anmeldenummer: 80106799.2

(51) Int. Cl.³: **B 23 B 45/00**

(22) Anmeldetag: 05.11.80

(30) Priorität: 16.05.80 DE 3018776

(43) Veröffentlichungstag der Anmeldung:
25.11.81 Patentblatt 81/47

(84) Benannte Vertragsstaaten:
CH DE FR GB IT LI NL

(71) Anmelder: Licentia Patent-Verwaltungs-GmbH
Theodor-Stern-Kai 1
D-6000 Frankfurt/Main 70(DE)

(72) Erfinder: Stiltz, Erwin, Dipl.-Ing.
Birkenrain 4
D-7057 Winnenden(DE)

(72) Erfinder: Hoyer, Rudolf
Im Kugelhof 34
D-7154 Althütte(DE)

(72) Erfinder: Geis, Wilhelm
Mühlefeldstrasse 8
D-7057 Leutenbach(DE)

(74) Vertreter: Wolf, Otto, Dr. Ing.
Licentia Patent-Verwaltungs-GmbH Theodor-Stern-Kai 1
D-6000 Frankfurt 70(DE)

(54) Elektrowerkzeug mit einem Zweiganggetriebe.

(57) Elektrowerkzeug mit einem Zweiganggetriebe (entsprechend P 30 18 776.9-14)
Bei einem mit einem Zweiganggetriebe ausgerüsteten
Elektrowerkzeug soll das Getriebe im Vergleich zu den bisher
bekannten Getrieben dieser Art dahingehend verbessert werden, daß es einfacher im Aufbau, zuverlässiger im Betrieb und
hinsichtlich der Gangumschaltung problemloser wird.
Diese Verbesserung wird dadurch erzielt, daß die beiden
Zahnräder (2,3) drehbar und axial verschiebbar auf der
Getriebeabtriebswelle (1) angebracht sind und im Bereich
ihrer einander zugewandten Flächen Sackbohrungen (5,6)
aufweisen, daß das Schaltglied (4) im Raum zwischen den
beiden Zahnrädern axial verschiebbar, jedoch unverdrehbar
auf der Getriebeabtriebswelle angeordnet und mit abgefederten Mitnahmebolzen (8',9') versehen ist, die parallel zur
Getriebeabtriebswelle verlaufen und mit Sackbohrungen
(5,6) des einen und anderen Zahnrads (2,3) in Eingriff bringbar
sind, und daß die beiden Zahnräder wenigstens mittels eines
Distanzbolzens (19) auf Abstand gehalten sind, der in einer
parallel zur Getriebeabtriebswelle verlaufenden Bohrung (18)
im Schaltglied verschiebbar geführt ist.

./...

EP 0 040 261 A1

Fig.1

## Elektrowerkzeug mit einem Zweiganggetriebe

Die Erfindung bezieht sich auf ein Elektrowerkzeug mit einem Zweiganggetriebe, das zwei im Abstand voneinander auf der Getriebeabtriebswelle sitzende, unterschiedliche Zähnezahl aufweisende Zahnräder enthält, die durch ein Schaltglied wahlweise mit der Getriebeabtriebswelle kuppelbar sind und denen jeweils ein auf einer Vorgelegewelle angebrachtes Antriebszahnrad zugeordnet ist.

Bei einem bekannten Getriebe dieser Art ist eine Mitnehmerhülse drehfest auf der Antriebsspindel einer Handbohrmaschine angebracht und auf dieser Mitnehmerhülse ist das Zahnrad für die zweite Getriebestufe (Schnellgang) axial verschiebbar und drehbar gelagert. Dieses Zahnrad weist werkzeugseitig eine Nabe auf, auf welcher wiederum das Zahnrad für die erste Getriebestufe (Langsamgang) ebenfalls drehbar angeordnet ist. Die beiden Zahnräder sind dabei in bekannter Weise als Überholräder ausgebildet, derart, daß das Zahnrad für die erste Getriebestufe vom Zahnrad für die zweite Getriebestufe überholbar ist.

Der Antrieb des Zahnrads für die erste Getriebestufe erfolgt unmittelbar mittels eines fest auf einer Vorgelegewelle sitzenden Zahnrads. Die zweite Getrie-

-bestufe wird hingegen mit Hilfe eines Schaltzahrads zugeschaltet, das im Eingriff mit dem Zahnrad für die zweite Getriebestufe steht und das axial verschiebbar sowie zunächst frei drehbar auf der Vorgelegewelle angeordnet ist und das mit Hilfe eines Umschalthebels mit einem fest auf der Vorgelegewelle sitzenden Antriebszahnrad gekuppelt wird. Danach läuft die Antriebsspindel mit der Drehzahl der zweiten Getriebestufe um, wobei das Zahnrad für die erste Stufe vom Zahnrad für die zweite Stufe überholt wird.

Eine derartige Getriebekonzeption ist sowohl fertigungstechnisch gesehen als auch bezüglich der Montage verhältnismäßig aufwendig, außerdem erfordert sie eine nicht geringe Anzahl von Verschleißteilen.

Der vorliegenden Erfindung liegt die Aufgabe zugrunde, ein Zweiganggetriebe für Elektrowerkzeuge zu schaffen, das vergleichsweise einfacher im Aufbau, zuverlässiger im Betrieb und hinsichtlich der Gangumschaltung problemlos ist.

Diese Aufgabe ist erfindungsgemäß dadurch gelöst, daß die beiden Zahnräder drehbar und axial verschiebbar auf der Getriebeabtriebswelle angebracht sind und im Bereich ihrer einander zugewandten Flächen Sackbohrungen aufweisen, daß das Schaltglied im Raum zwischen den beiden Zahnrädern axial verschiebbar, jedoch unverdrehbar auf der Getriebeabtriebswelle angeordnet und mit abgefederten Mitnahmebolzen versehen ist, die parallel zur Getriebeabtriebswelle verlaufen und mit Sackbohrungen des einen und anderen Zahnrads in Eingriff bringbar sind, und daß die beiden Zahnräder wenigstens mittels eines Distanzbolzens

- 3 -

auf Abstand gehalten sind, der in einer parallel zur
Getriebeabtriebswelle verlaufenden Bohrung im Schaltglied verschiebbar geführt ist.

Als besonders zweckmäßig hat es sich erwiesen, im
Schaltglied vier um ca. 90° räumlich gegeneinander
versetzte Mitnahmebolzen vorzusehen, von denen zwei
einander diametral gegenüberliegende dem Zahnrad für
die erste Getriebestufe bzw. dessen Sacklöchern zugeordnet sind und die beiden anderen Mitnahmebolzen
um 180° gegenüber den ersteren gedreht sind und mit
den Sacklöchern des Antriebszahnrads für die zweite
Getriebestufe korrespondieren.
Ferner hat sich die Verwendung von zwei räumlich um
180° gegeneinander versetzten Distanzbolzen bewährt.

Ein Ausführungsbeispiel des Gegenstandes der Erfindung
in Anwendung bei einer Schlagbohrmaschine wird im
nachstehenden anhand der Zeichnung erläutert.
Es zeigen
    Figur 1 einen Längsschnitt durch den Getriebekopf der Schlagbohrmaschine,
    Figur 2 eine Ansicht längs des Schnittes
        durch Figur 1,
    Figur 3 eine Vorderansicht des Schaltglieds,
    Figur 4a) und 4b) je einen im Schaltglied untergebrachten Mitnahmebolzen in vergrößerter
        Darstellung.

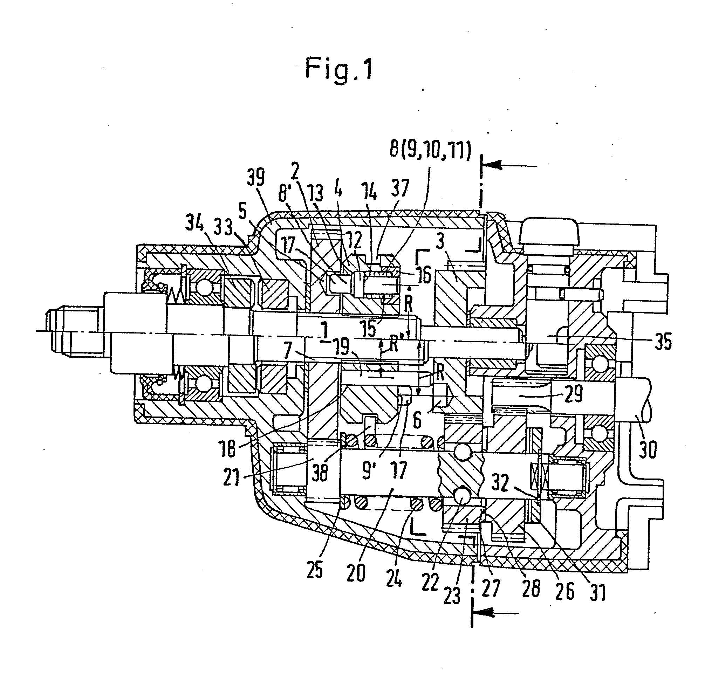

In Fig. 1 ist mit 1 die die Bohrspindel verkörpernde
Getriebeabtriebswelle, mit 2 das Zahnrad für die
erste Getriebestufe, mit 3 das einen kleineren Durchmesser und eine geringere Zähnezahl aufweisende Zahnrad für die zweite Getriebestufe und mit 4 das Schaltglied für die wahlweise Kupplung der Zahnräder
2 und 3 mit der Getriebeabtriebswelle 1 bezeichnet.

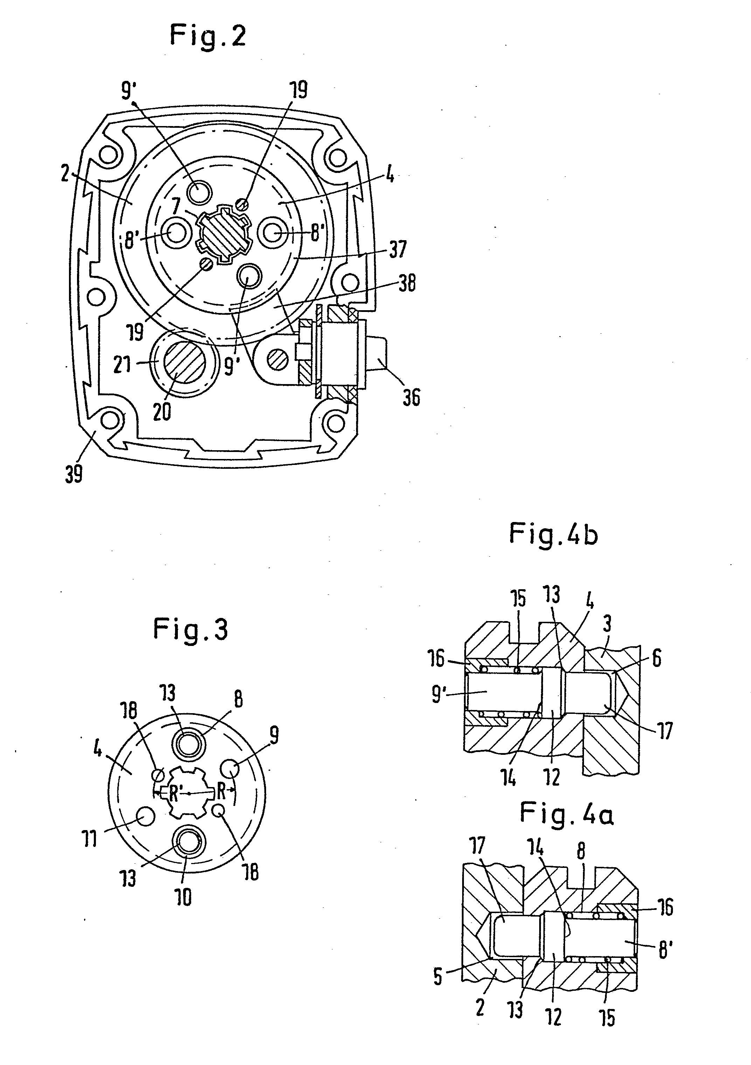

Die Zahnräder 2 und 3 sind drehbar und axial verschiebbar auf der Getriebeabtriebswelle 1 angeordnet
und im Bereich ihrer einander zugewandten Flächen
mit auf einem gemeinsamen Radius R angebrachten Sackbohrungen 5 und 6 versehen. Das als Schaltring ausgebildete Schaltglied 4 ist im Raum zwischen den beiden
Zahnrädern 2 und 3 axial verschiebbar auf der Getriebeabtriebswelle 1 angebracht und steht mit dieser
durch eine Keilwellenverzahnung 7 in kraftschlüssiger
Verbindung. Das Schaltglied 4 enthält, wie insbesondere aus Fig. 3 ersichtlich ist, vier durchgehende
Bohrungen 8,9,10 und 11, die räumlich um ca.90°
gegeneinander versetzt sind und auf demselben Radius R
wie die Sackbohrungen 5 und 6 liegen. In die Bohrungen 8 bis 11 sind Mitnahmebolzen 8' und 9' eingesetzt,
und zwar so, daß jeweils zwei einander diametral
gegenüberliegende Mitnahmebolzen einem Zahnrad zugekehrt sind. Beim Ausführungsbeispiel sind dem Zahnrad 2 die Mitnahmebolzen 8' (Fig.4a) zugeordnet, dem
Zahnrad 3 hingegen die Mitnahmebolzen 9' (Fig.4b).
Dabei sind die letzteren gegenüber den ersteren um
180° verschwenkt angeordnet.

Die Mitnahmebolzen weisen jeweils einen bundförmigen
Ansatz 12 auf, der sich bezogen auf das ihm jeweils
zugeordnete Zahnrad an einer durch eine Verringerung
des Durchmessers der Bohrungen 8 bis 11 gewonnenen
Anschlagfläche 13 abstützt und in seinem rückwärtigen
Bereich eine Auflagefläche 14 für jeweils eine Feder
15 bildet, die jeweils durch eine Gewindehülse 16
oder dgl. in ihrer Lage fixiert und einjustierbar
sind (Fig. 4a und 4b).

Der den Sackbohrungen 5 und 6 jeweils zugekehrte Kopf 17 der Mitnahmebolzen ragt über die betreffende Stirnfläche des Schaltglieds hinaus und ist ballig ausgeführt.

Das Schaltglied 4 ist mit zwei durchgehenden Längsbohrungen 18 versehen, die auf einem Radius R' liegen und räumlich um ca. 180° gegeneinander versetzt sind. In diesen Bohrungen sind Distanzbolzen 19 leicht verschiebbar untergebracht, welche die beiden Zahnräder 2 und 3 auf Abstand halten (Fig. 1 und 3).

Der Antrieb des Zahnrads 2 erfolgt mittels eines auf der Vorgelegewelle 20 fest angebrachten Zahnrads 21, hingegen wird das Zahnrad 3 von dem längsverschiebbar auf der Vorgelegewelle 20 angeordneten und mittels der Kugeln 22 mitgenommenen Zahnrad 23 angetrieben. Das Zahnrad 23 steht unter der Einwirkung einer Kupplungsfeder 24, die sich an ihrem anderen Ende über eine Scheibe 25 am Zahnrad 21 abstützt. An seiner dem Vorgelegezahnrad 26 zugewandten Fläche weist das Zahnrad 23 Kupplungsratschen 27 auf, denen am Vorgelegezahnrad 27 angebrachte Gegenratschen 28 zugeordnet sind (Fig. 1).

Das Vorgelegezahnrad 26 ist drehbar auf der Vorgelegewelle angebracht und steht im Eingriff mit dem Ritzel 29 der Motorantriebswelle 30. Zur Sicherung gegen ein Verschieben nach der Motorseite hin dient eine verdrehsichere Scheibe 31, die mittels eines Seegerrings 32 gehalten ist.

Im Getriebegehäuse 39 sitzt eine mit diesem kraftschlüssig verbundene, axial nicht verschiebbare Rastenscheibe 33, die mit einer Gegenrastenscheibe 34 korrespondiert, welche fest auf der Getriebeabtriebswelle sitzt und mit dieser relativ zur axial unverschieblichen Rastenscheibe 33 verschiebbar ist.

In der im unteren Teil in Fig. 1 festgehaltenen Lage der Getriebeabtriebswelle 1 stehen die beiden Rastenscheiben 33 und 34 im Eingriff, und das Werkzeug führt eine Schlag- und Drehbewegung aus (Schlagbohrstellung).
Diese Lage der Getriebewelle wird dadurch ermöglicht, daß die an sich bekannte Einstellvorrichtung 35 eine entsprechende Rückwärtsbewegung der Getriebeabtriebswelle bzw. der Bohrspindel zuläßt.

Soll das Werkzeug nur eine reine Drehbewegung ausführen (reiner Bohrbetrieb), bedarf es lediglich einer Umschaltung der Einstellvorrichtung derart, daß das rückwärtige Ende der Getriebeabtriebswelle an einem Begrenzungsanschlag zur Anlage kommt. Dadurch ist eine Rückwärtsbewegung der Getriebeabtriebswelle unterbunden, und die beiden Rastenscheiben 33 und 34 gelangen außer Eingriff. Diese Lage der Getriebeabtriebswelle 1 und der Rastenscheiben 33 und 34 ist im oberen Teil der Fig. 1 festgehalten.

Die Wirkungsweise des Zweiganggetriebes nach der Erfindung ist wie folgt:
Die Drehbewegung der Motorantriebswelle 30 wird über deren Ritzel 29 auf das Vorgelegezahnrad 26 und von diesem auf das Zahnrad 23 übertragen, das über die Kugeln 22 die Vorgelegewelle 20 in Drehung versetzt. Dadurch werden die beiden Zahnräder 2 und 3 über die Zahnräder 21 und 23 angetrieben. In der zeichnerisch festgehaltenen Lage des Schaltglieds 4 läuft das Zahnrad 3 leer um die Getriebeabtriebswelle 1 um, das Zahnrad 2 nimmt hingegen das Schaltglied 4 mit, da dessen Mitnahmebolzen 8' in die korrespondierenden Sackbohrungen 5 eingreifen. Da das Schaltglied 4 mit der Getriebeabtriebswelle 1 kraftschlüssig verbunden ist, führt diese eine Drehbewegung aus, und zwar mit der Drehzahl der ersten Getriebestufe. Diese Drehbewegung ist nun je nach Lage der Einstellvorrichtung 35 ein reiner Bohrvorgang oder ein Schlagbohrvorgang.

Zur Umschaltung auf die zweite Getriebestufe wird, wie Fig. 2 zeigt, das Schaltglied 4 mittels eines Stellhebels 36, der eine in die Umfangsnut 37 des Schaltglieds eingreifende Schaltgabel 38 besitzt, entlang der Distanzbolzen 19 gegen das Zahnrad 3 hin verschoben, bis die Köpfe 17 der beiden Mitnahmebolzen 9' (Fig. 4b) in die Sackbohrungen 6 des Zahnrads 3 eingreifen. In dieser Schaltstellung läuft das Zahnrad 2 leer um und die Getriebeabtriebswelle 1 wird vom Schaltglied 4 über das Zahnrad 3 in Drehung versetzt. Bezüglich der Vorgänge Schlagbohren und Bohren gilt das in Verbindung mit der eingeschalteten ersten Getriebestufe Gesagte sinngemäß.

Sofern das über die Zahnräder 21 und 23 auf die Vorgelegewelle 20 übertragene Widerstandsmoment einen voreinstellbaren Wert überschreitet, kommen die Ratschen 27 des Zahnrads 23 und die Gegenratschen 28 des Vorgelegezahnrads 26 außer Eingriff, indem das Zahnrad 23 gegen die Kraft der Kupplungsfeder 24 vom Vorgelegezahnrad 26 weg gedrückt wird.

Im Bedarfsfall kann den Sacklöchern 5 und 6 in den Zahnrädern 2 und 3 jeweils auch eine Einlaufschräge zugeordnet sein, derart, daß sich die Köpfe 17 der Mitnahmebolzen stetig in die Sacklöcher hineinbewegen.

Die abgefederten Mitnahmebolzen 8' und 9' ermöglichen ein Verschieben des Schaltglieds 4 von der einen in die andere Schaltstellung auch bei Stillstand des Getriebes; also beispielsweise auch dann, wenn die Köpfe 17 der Mitnahmebolzen 8' oder 9' nicht mit den zugehörigen Aufnahmebohrungen 5 oder 6 im Zahnrad 2 oder 3 fluchten. Beim Einschalten der Maschine findet dann solange eine Relativbewegung zwischen dem Schaltglied 4 und dem entsprechenden Zahnrad statt, bis die Mitnahmebolzen mit den zugeordneten Bohrungen fluchten und durch die Wirkung der Druckfedern 15 in diese einrasten. Damit ist der Einkuppelvorgang vollzogen.

Patentansprüche:

1. Elektrowerkzeug mit einem Zweiganggetriebe, das zwei im Abstand voneinander auf der Getriebeabtriebswelle sitzende, unterschiedliche Zähnezahl aufweisende Zahnräder enthält, die durch ein Schaltglied wahlweise mit der Getriebeabtriebswelle kuppelbar sind und denen jeweils ein auf einer Vorgelegewelle angebrachtes Antriebszahnrad zugeordnet ist, dadurch gekennzeichnet, daß die beiden Zahnräder (2,3) drehbar und axial verschiebbar auf der Getriebeabtriebswelle (1) angebracht sind und im Bereich ihrer einander zugewandten Flächen Sackbohrungen (5,6) aufweisen, daß das Schaltglied (4) im Raum zwischen den beiden Zahnrädern axial verschiebbar, jedoch unverdrehbar auf der Getriebeabtriebswelle angeordnet und mit abgefederten Mitnahmebolzen (8',9') versehen ist, die parallel zur Getriebeabtriebswelle verlaufen und mit Sackbohrungen (5,6) des einen und anderen Zahnrads (2,3) in Eingriff bringbar sind, und daß die beiden Zahnräder wenigstens mittels eines Distanzbolzens (19) auf Abstand gehalten sind, der in einer parallel zur Getriebeabtriebswelle verlaufenden Bohrung (18) im Schaltglied verschiebbar geführt ist.

2. Elektrowerkzeug nach Anspruch 1, dadurch gekennzeichnet, daß im Schaltglied (4) vier abgefederte Mitnahmebolzen (8',9') untergebracht sind, von denen zwei mit zwei Sackbohrungen (5) des Zahnrades (2) mit größerer Zähnezahl und die beiden anderen, spiegelbildlich zu den ersteren liegenden mit den beiden Sackbohrungen (6) des eine geringere Zähnezahl aufweisenden Zahnrads (3)
korrespondieren.

3. Elektrowerkzeug nach Anspruch 2, dadurch gekennzeichnet, daß die vier Mitnahmebolzen gegeneinander versetzt im Schaltglied sitzen und jeweils zwei einander diametral gegenüberliegende Mitnahmebolzen den Sackbohrungen eines Zahnrads zugeordnet sind.

4. Elektrowerkzeug nach den Ansprüchen 1-3, dadurch gekennzeichnet, daß die drehfeste Verbindung des Schaltglieds (4) mit der Getriebeabtriebswelle (1) durch eine Keilwellenverzahnung verwirklicht ist.

5. Elektrowerkzeug nach einem oder mehreren der vorhergehenden Ansprüche, dadurch gekennzeichnet, daß die den Sackbohrungen (5,6) der Zahnräder (2,3) zugeordneten Zapfen (17) der Mitnahmebolzen abgerundet sind.

6. Elektrowerkzeug nach den Ansprüchen 1-5, dadurch gekennzeichnet, daß die Getriebeabtriebswelle durch die Antriebsspindel des Werkzeugs verkörpert ist.

7. Elektrowerkzeug nach den Ansprüchen 1-6, dadurch gekennzeichnet, daß das Schaltglied (4) als mit einer Umfangsnut (37) versehener Schaltring ausgebildet ist, der mittels einer in die Nut eigreifenden, eine Relativbewegung des Schaltrings zulassenden Schaltgabel (38) axial verschiebbar ist.

Fig.1

# Fig.2

# Fig.4b

# Fig.3

# Fig.4a

| | Europäisches Patentamt | **EUROPÄISCHER RECHERCHENBERICHT** | | EP 8O106799.2 |

## EINSCHLÄGIGE DOKUMENTE

| Kategorie | Kennzeichnung des Dokuments mit Angabe. soweit erforderlich. der maßgeblichen Teile | betrifft Anspruch | KLASSIFIKATION DER ANMELDUNG (Int Cl.¹) |
|---|---|---|---|
| E | <u>EP - A1 - O O23 233</u> (BLACK & DECKER) (O4-O2-1981)<br><br> + Seite 9, Zeilen 18 bis 23; Fig.2,5-7 +<br><br>-- | 1,4-7 | B 23 B 45/00 |
| | <u>DE - A - 2 129 771</u> (BOSCH)<br><br> + Seite 5, Zeilen 27-32; Seite 6, Zeilen 1-22 +<br><br>-- | 1,2,4-7 | |
| | <u>DE - A1 - 2 511 469</u> (BOSCH)<br><br> + Seite 7, Zeilen 21-28; Seite 8, Zeilen 1-3; Fig.2 +<br><br>---- | 1,4-7 | |

**RECHERCHIERTE SACHGEBIETE** (Int. Cl.³)

B 23 B 45/00

B 28 D 1/OO

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Thedrien oder Grundsatze

E: kollidierende Anmeldung

D: in der Anmeldung angefuhrtes Dokument

L: aus andern Gründen angeführtes Dokument

&: Mitglied der gleichen Patent- familie. übereinstimmendes Dokument

| X | Der vorliegende Recherchenbericht wurde fur alle Patentanspruche erstellt. |
|---|---|

| Recherchenort | Abschlußdatum der Recherche | Pruler |
|---|---|---|
| WIEN | 22-07-1981 | KIENAST |

EPA form 1503.1  06.78